# DEMANDE DE BREVET EUROPEEN

(11) **EP 1 217 059 A1**
(43) Date de publication de la demande: **26.06.2002**
(21) Numéro de dépôt: 00870327.4
(22) Date de dépôt: 22.12.2000
(51) Int. Cl.: C10B 53/00, C02F 11/10, B09B 3/00, F23G 5/027, F23G 7/00, B01D 53/40, B01D 53/64, A62D 3/00

(54) **Procédé et installation pour le traitement combine de résidus de broyage et de boues**

(71) Demandeur: Soboref S.A., 6200 Chatelet (BE)
(72) Inventeur: Grosjean, Philippe, 6110 Montigny-le-Tilleul (BE)
(74) Mandataire: Van Malderen, Michel

(57) **Abrégé**

La présente invention se rapporte à un procédé combiné de traitement et valorisation de résidus de broyage, au moins en partie métalliques, tels que de la ferraille broyée, contaminés par des substances organiques, avec des boues contenant des matières organiques, comprenant les étapes suivantes :
- lesdits résidus de broyage subissent une thermolyse, produisant des résidus solides riches en charbon épuré et des gaz de thermolyse riches en hydrocarbures ;
- lesdits résidus solides subissent un traitement mécanique, dont sont extraits des métaux et du charbon traité ;
- lesdites boues, mélangées avec le charbon traité, subissent un traitement thermique final utilisant également comme combustible lesdits gaz de thermolyse ;
- le traitement thermique final produit des cendres décontaminées et des fumées.

## Description

### Objet de l'invention

La présente invention se rapporte à un nouveau procédé de traitement et valorisation de résidus de broyage métalliques légers (RBL) et de boues, provenant par exemple de stations d'épuration et du dragage.

L'invention concerne également l'installation permettant la mise en oeuvre du procédé.

### Arrière-plan technologique et état de la technique

Les résidus de broyage métalliques produits par les ferrailleurs en Région wallonne constituent un déchet habituellement mis en décharge. La Demanderesse y possède ainsi l'un des quatre chantiers industriels confrontés à la problématique d'élimination des résidus provenant du broyage des ferrailles.

La majeure partie de ces résidus sont des déchets de broyage légers (RBL), venant principalement de véhicules automobiles usagés. Ils contiennent une quantité non négligeable de métaux non-ferreux qu'il convient de récupérer.

De plus, la réglementation régionale impose, depuis 1991, que ces déchets de broyage légers soient éliminés en décharges contrôlées de classe 1, lesquelles sont situées exclusivement en Région flamande. Les autorisations de mise en décharge en Région flamande ont été obtenues en 1993, pour une période transitoire.

Les déchets de classe 1 sont les déchets dangereux ayant un contenu en PCB > 50 ppm et en hydrocarbures d'au moins 1,5%.

Aujourd'hui en Belgique, près de 100 000 tonnes de RBL sont déversés annuellement en décharge, avec des conséquences dommageables pour l'environnement résultant de la contamination par les matières organiques et métaux lourds.

Dans ce contexte, vu l'objectif des autorités régionales de réduire la mise en décharge, la Demanderesse a initié le développement d'un projet de valorisation des RBL, principalement par thermolyse et pour une quantité s'élevant typiquement à 50 000 tonnes/an.

Cette démarche est également motivée, d'une part, par les coûts de mise en décharge et d'autre part, par la proposition de directive européenne imposant, d'ici 2005, un taux de réutilisation/recyclage des véhicules hors d'usage de 80% et un taux de réutilisation/valorisation de 85%, par rapport au poids du véhicule.

Le projet de valorisation de résidus de broyage ne se limite pas à la seule mise au point d'une technologie de pyrolyse, ou plus particulièrement de thermolyse de déchets, mais doit se concevoir dans le cadre d'une filière globale, prenant en compte :
- d'une part, les flux de déchets et leurs caractéristiques au sens le plus large, c'est-à-dire les quantités, les provenances, les compositions chimiques, la classification administrative, les modalités d'élimination , les évolutions, etc. ;
- d'autre part, les possibilités de valorisation optimale des produits et sous-produits issus de leur traitement.

La thermolyse n'apparaît donc pas comme une fin en soi, mais bien un moyen technologique à inscrire dans une filière permettant cette valorisation optimale recherchée.

Ainsi, un inventaire des technologies disponibles de même qu'une étude technico-économique ont permis de sélectionner le procédé de thermolyse pour le traitement de la fraction grenue des RBL, à savoir de granulométrie supérieure à 13 mm. Ces déchets présentent un pouvoir calorifique important et contiennent une quantité appréciable de métaux non-ferreux à récupérer.

D'autre part, il apparaît que le gisement de boues de dragage et de boues de stations d'épuration contaminées en Région wallonne est non négligeable. Ces produits contiennent des matières organiques et des métaux lourds qu'il convient d'éliminer. Ainsi, l'utilisation des voies navigables pour l'acheminement des déchets sur le site de traitement est également compatible avec la problématique du dragage.

Le procédé proposé dans le cadre de l'invention permet de coupler le traitement des RBL avec une décontamination des boues en vue de les valoriser.

### Buts de l'invention

La présente invention vise à fournir un nouveau procédé de traitement et de valorisation de déchets de broyage métalliques légers, constituant une solution alternative et durable à la mise en décharge.

Un but complémentaire de l'invention est de réaliser ce traitement et cette valorisation sur base de techniques de pyrolyse ou thermolyse.

Un but encore complémentaire de l'invention est de valoriser le charbon épuré obtenu.

Un but alternatif de l'invention est la valorisation de boues grâce à un traitement thermique.

Un but complémentaire de l'invention est la production d'électricité grâce à l'énergie contenue dans les fumées issues du traitement thermique des boues.

### Principaux éléments caractéristiques de l'invention

La présente invention se rapporte à un procédé combiné de traitement et valorisation de résidus de broyage, de préférence métalliques, tels que de la ferraille broyée, contaminés par des substances organiques, avec des boues contenant des matières organiques, comprenant les étapes suivantes :
- lesdits résidus de broyage subissent une thermolyse, produisant des résidus solides riches en charbon épuré et des gaz de thermolyse riches en hydrocarbures ;
- lesdits résidus solides subissent un traitement mécanique, dont sont extraits des métaux et du charbon traité ;
- lesdites boues, mélangées avec le charbon traité, subissent un traitement thermique final utilisant également comme combustible lesdits gaz de thermolyse ;
- le traitement thermique final produit des cendres décontaminées et des fumées.

Avantageusement, les résidus de broyage comprennent la fraction grenue de résidus de broyage légers, en particulier des particules de granulométrie supérieure à 13 mm. Les boues sont des boues de station d'épuration ou des boues de dragage.

De préférence, la thermolyse est réalisée à une température telle que le charbon épuré et les gaz de thermolyse sont produits dans le rapport massique 1:1, le PCI desdits résidus de broyage étant compris entre 3500 et 4500 kcal/kg.

Toujours de préférence, la thermolyse est réalisée de façon à obtenir, d'une part, des gaz de thermolyse dont le PCI est compris entre 6500 et 7500 kcal/kg et, d'autre part, du charbon épuré dont le PCI est compris entre 1000 et 2000 kcal/kg.

De préférence, le PCI des boues utilisées est compris entre 650 et 750 kcal/kg.

Toujours selon l'invention, le traitement thermique final comprend de préférence les étapes successives de passage dans au moins un cyclone, au moins une chambre de combustion, au moins une chaudière, au travers d'une injection de chaux, de charbon actif et dans au moins un filtre à manches. De plus, les fumées issues du traitement thermique final sont contrôlées par rapport à leur concentration en métaux lourds, en dioxines et en furanes.

Selon une modalité de réalisation préférentielle de l'invention, la co-combustion du charbon et du gaz de thermolyse à un rapport massique 1:1 est d'environ 1400°C, la température atteinte pendant le traitement thermique final dépendant du rapport massique boues/charbon épuré, et est de préférence comprise entre 1050 et 1250°C.

Encore de préférence, la température du traitement thermique final est d'environ 1100°C avec un rapport massique boues/charbon épuré d'environ 5.

En service, le procédé de l'invention est mis en oeuvre dans une installation pour le traitement et la valorisation énergétique combinés de résidus de broyage légers, de préférence métalliques, tels que de la ferraille broyée, de granulométrie contrôlée et contaminés par des substances organiques, avec des boues contenant des matières organiques, caractérisée en ce qu'elle comprend :
- des moyens pour le chargement des résidus de broyage légers ;
- au moins une unité de thermolyse desdits résidus de broyage légers dans laquelle sont produits, de préférence dans un rapport massique 1:1, des résidus solides riches en charbon épuré et des gaz de thermolyse riches en hydrocarbures ;
- des moyens mécaniques pour la séparation d'une fraction importante de métaux présents dans lesdits résidus solides ;
- des moyens propres pour le chargement de boues, de préférence de station d'épuration et de dragage, suivis de moyens pour le mélange desdites boues avec lesdits résidus solides traités mécaniquement ;
- des moyens pour l'amenée et l'injection dudit mélange dans un four tournant, où ledit mélange subit un traitement thermique à haute température, et des moyens pour l'amenée et l'injection desdits gaz de thermolyse et d'air de combustion au niveau du brûleur dudit four tournant;
- un convoyeur à double enveloppe pour l'extraction et le refroidissement indirect par eau des cendres décontaminées produites dans ledit traitement thermique ;
- des moyens pour la décontamination des fumées produites dans ledit traitement thermique, pour le rejet desdites fumées décontaminées dans l'atmosphère, pour la reprise des poussières contenues dans lesdites fumées et pour la valorisation de l'énergie calorifique contenues dans lesdites fumées.

Avantageusement, les moyens mécaniques pour la séparation des métaux présents dans lesdits résidus solides comprennent un dispositif de criblage à 3 mm, suivi de deux broyeurs à cylindre installés en cascade, de préférence ouverts respectivement à 500 µm et 250 µm, dans lesquels le passant est envoyé par gravité et lesquels sont suivis par un deuxième dispositif de criblage, de préférence à 500 µm.

Toujours avantageusement, les moyens pour le chargement desdites boues comprennent au moins une trémie tampon munies de vis sans âmes réparties parallèlement de manière régulière, une vis de reprise et une vis inclinée.

Encore avantageusement, les moyens de décontamination des fumées comprennent au moins un cyclone suivi d'une chaudière comprenant une antichambre pour la réalisation d'une post-combustion, ladite chaudière étant elle-même suivie d'un réacteur pour la neutralisation des fumées et le captage des métaux lourds par injection de lait de chaux, et de préférence de charbon actif, ledit réacteur étant suivi d'un filtre à manches.

De préférence, ladite chaudière est un générateur de vapeur alimentant une turbine couplée à un alternateur pour la production d'électricité.

Selon une caractéristique encore préférentielle de l'invention, les moyens de reprise des poussières comprennent un transporteur en masse avec isolation, disposé sous le cyclone, la chaudière et le filtre à manches, ainsi qu'un dispositif de mise en "big-bag".

La présente invention présente de nombreux avantages dont :
- la possibilité de valoriser directement les résidus de thermolyse, gaz et charbons, dans une installation combinée, ou sur le même site, sous forme de combustible dans un deuxième processus de traitement thermique de déchets ;
- de par la nature réductrice du carbone, cette deuxième combustion permet le confinement des métaux lourds presque exclusivement dans les fumées, et après purification de celles-ci, sous forme de poussières solides récoltées à un stade bien précis du processus ; de même, d'autres polluants majeurs tels que dioxines et furanes sont éliminés à ce stade, contrairement au cas de certaines techniques de traitement de boues, où on n'élimine que les hydrocarbures ;
- le deuxième traitement thermique utilise comme combustible du gaz et du charbon de thermolyse ainsi que de l'air et permet de s'affranchir de l'adjonction de gaz naturel externe ;
- la condensation des huiles n'est pas nécessaire ;
- du fait de la deuxième étape de traitement thermique, il n'est pas nécessaire non plus de sécher les charbons de thermolyse ;
- ce procédé permet le recyclage presque à 100% des résidus de broyage légers, provenant en particulier de véhicules automobiles usagés ;
- ce procédé présente un prix de revient à la tonne de déchets traités très compétitif par rapport à l'incinération, de même qu'un meilleur respect de l'environnement ;
- ce procédé permet quasiment de supprimer la mise en décharge pour les déchets dérivés de résidus de broyage et pour les boues ;
- les cendres obtenues finalement peuvent être valorisées dans des filières telles que remblais, incorporation dans la fabrication de béton, briques, ou encore en cimenterie, etc.

### Brève description des figures

La figure 1 représente schématiquement le procédé de traitement thermique combiné de résidus de broyage légers et de boues de station d'épuration et de dragage, selon l'invention.

La figure 2 représente schématiquement une installation de traitement thermique combiné de résidus de broyage légers et de boues de station d'épuration et de dragage, correspondant au procédé de la figure 1.

La figure 3 représente la simulation théorique de l'évolution de la température du four lors de la co-combustion de charbon et de gaz de thermolyse en fonction du rapport massique charbon/gaz, dans le traitement thermique de l'invention.

La figure 4 représente la simulation théorique de l'évolution de la température du four et de l'énergie libérée par la co-combustion de charbon, gaz et boues en fonction de la quantité de boues incorporée dans le traitement thermique de l'invention.

### Description d'une forme d'exécution préférée de l'invention

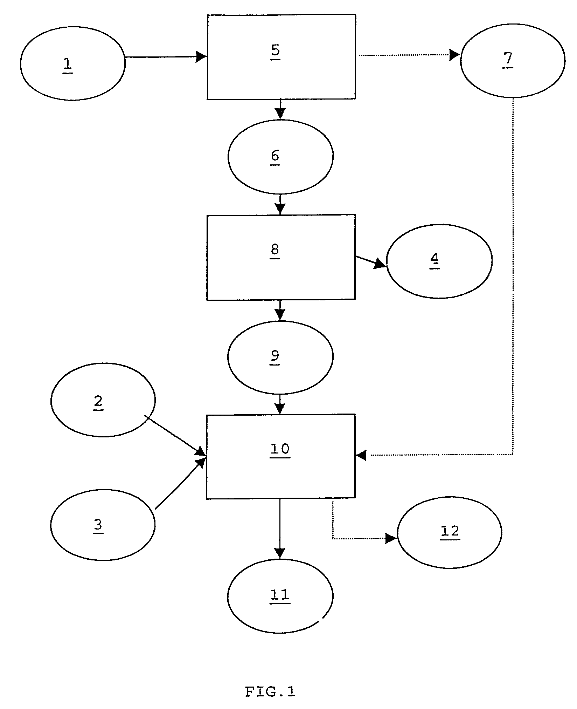

Le schéma de base du procédé de l'invention est décrit à la figure 1 au moyen d'un diagramme de flux. Le principe à la base de l'invention est de valoriser les RBL au départ d'une thermolyse. Compte tenu de la disponibilité d'une part en gaz de thermolyse et d'autre part en charbon épuré, à la suite de cette thermolyse, il est envisageable d'utiliser l'énergie renfermée dans ces deux types de combustible pour traiter d'autres produits ou déchets, de préférence dans une installation unique ou sur un même site.

Les données chiffrées divulguées ci-dessous se rapportent à un mode de réalisation particulier de l'invention donné à titre d'exemple.

La première étape du procédé est donc une thermolyse 5 des RBL 1 à 500-600°C sous une atmosphère contenant entre 1 et 2% O₂. Il en résulte la production dans un rapport massique imposé 1:1 de coke ou charbon épuré, dit coke de thermolyse 6 et de gaz riche en hydrocarbures, dit gaz de thermolyse 7. Le PCI moyen des RBL est typiquement de 4 000 kcal/kg.

Le charbon épuré produit 6, dont le PCI est typiquement de 1 500 kcal/kg, subit alors un traitement mécanique 8 permettant d'extraire les métaux 4 principalement non-ferreux qu'il contient. A l'issue de ce traitement, on obtient du charbon traité 9. Cette étape permet d'obtenir une ferraille à haute valeur ajoutée pouvant par exemple être récupérée dans le circuit sidérurgique ou métallurgique.

Le gaz de thermolyse 7 est valorisé énergétiquement dans le traitement thermique 10 simultané ou ultérieur de charbon traité produit par la thermolyse et de boues, en l'occurrence boues de station d'épuration 2 (PCI = 720 kcal/kg typiquement) et de dragage 3 (PCI = 700 kcal/kg typiquement). L'intérêt des boues est, outre leur haut pouvoir calorifique, de présenter une granulométrie de l'ordre de 40 à 50 µm, ce qui facilite l'homogénéisation avec le charbon de thermolyse.

Ce traitement thermique 10 a pour but de sécher les boues, d'éliminer les matières organiques et volatiles contenues dans les boues de dragage, d'éliminer un maximum de métaux lourds présents dans le mélange charbon/boues, tout en utilisant le caractère réducteur du charbon.

Le traitement thermique 10 comprend par exemple, de manière classique et connue en soi, les étapes successives de passage des fumées dans un cyclone, une chambre de post-combustion, une chaudière, au travers d'une injection de chaux, de charbon actif et enfin dans un filtre à manches. In fine on obtient des fumées filtrées 12 s'échappant dans l'atmosphère et des cendres 11.

De plus, l'énergie contenue dans les gaz issus du traitement thermique du mélange est récupérée par exemple sous forme d'électricité via la production, dans une chaudière, de vapeur vive alimentant un turboalternateur. Pour des raisons environnementales, il convient de porter une attention toute particulière au traitement des "gaz" 12 issus du traitement thermique 10. En effet, il importe de s'assurer de la condensation des métaux lourds et de l'élimination des dioxines et des furanes.

On utilise la fraction grenue des RBL (granulométrie > 13 mm). Le procédé de thermolyse a été sélectionné sur base de la qualité des produits résiduels, à savoir à hauteur de 50% de gaz de thermolyse chargés d'hydrocarbures et 50% de résidus carbonés constituant le coke de thermolyse ou charbon épuré.

Cette thermolyse est dimensionnée pour une quantité de déchets s'élevant à environ 50 000 tonnes/an et ce, de manière à pouvoir répondre à la quantité de résidus de broyage produite annuellement dans la zone géographique concernée par le site de traitement.

Les charbons issus de la thermolyse subissent ensuite un traitement mécanique permettant la récupération d'une quantité appréciable de métaux non-ferreux.

Compte tenu de la disponibilité, d'une part d'un gaz de thermolyse à haute valeur énergétique (PCI = 6900 kcal/kg typiquement) et d'autre part d'un charbon épuré, on a opportunément étudié l'utilisation pouvant être faite de cette énergie, pour le traitement thermique simultané d'autres déchets. Les produits sélectionnés au terme de cette réflexion sont les boues de station d'épuration 2 ainsi que les boues de dragage 3.

La température atteinte lors du traitement thermique de ces trois types de déchets dépend notamment du rapport massique boues 2,3 / charbon épuré 9. La température de ce traitement thermique est supérieure à la température de thermolyse, pour un taux d'oxygène de maximum 3%. Le caractère réducteur du charbon permet l'évaporation des métaux lourds, sous forme de chlorures principalement, dans les gaz de combustion. On a ainsi constaté la présence de chlore dans les charbons, ce qui favorise précisément cette formation de chlorures.

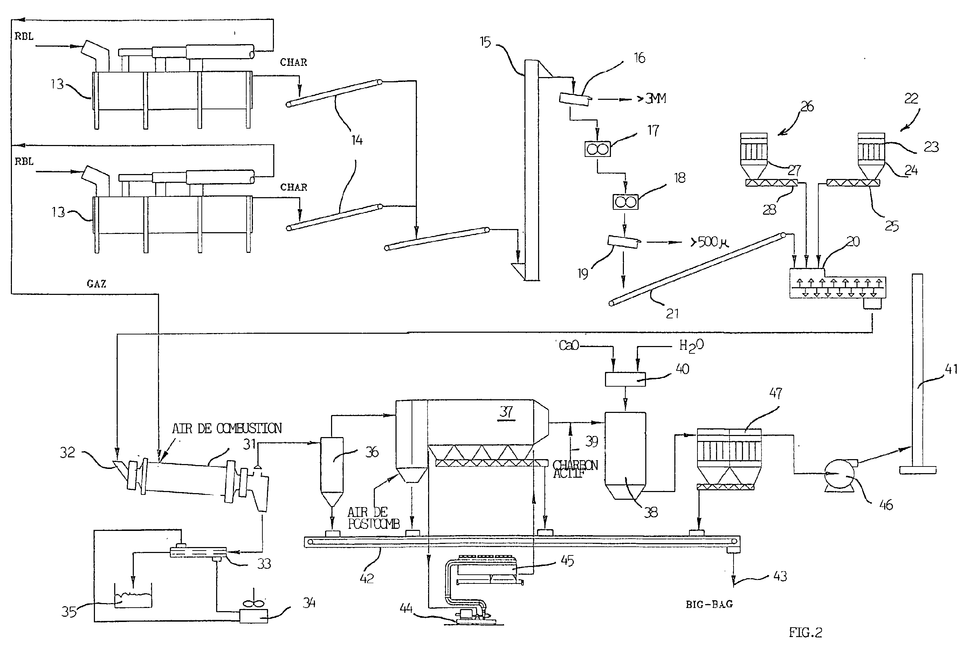

La figure 2 montre un exemple de schéma d'installation pour la mise en oeuvre du procédé de l'invention.

La thermolyse 13 de la fraction grenue de RBL (granulométrie > 13 mm) produit, dans un rapport 1:1 de préférence, un gaz de thermolyse ainsi qu'un résidu carboné, le charbon ou coke de thermolyse. Le coke est acheminé via un transporteur de masse 14 vers un élévateur à godet 15 qui alimente un premier criblage 16 à 3 mm. Ce criblage permet d'éliminer une partie importante des métaux présents dans le charbon. Le refus constitue donc une fraction valorisable tandis que le passant est envoyé par gravité vers deux broyeurs à cylindres installé en cascade. Le premier broyeur 17 est ouvert à 500 µm et le deuxième 18 à 250 µm. Le produit ainsi éclaté passe par un second crible 19 à 500 µm de manière à éliminer le maximum de métaux lourds encore présents dans le charbon. Le passant est alors envoyé vers un mélangeur 20 via un transporteur de masse 21.

Les boues de station d'épuration sont amenées du site de stockage vers une trémie tampon 22, munie de vis sans âmes réparties parallèlement de manière régulière 23. Les boues de station d'épuration sont ensuite dirigées vers le mélangeur au moyen d'une vis de reprise 24 suivie d'une vis inclinée 25.

De même, les boues de dragage sont amenées du site de stockage vers une trémie tampon 26, également munie de vis sans âmes. Les boues de dragage sont ensuite dirigées vers le mélangeur au moyen d'une vis de reprise 27 suivie d'une vis inclinée 28.

Le mélangeur 20 alimente un four tournant 31 pour traitement thermique. Les gaz issus de la thermolyse des RBL sont utilisés comme combustible et sont injectés au niveau du brûleur du four 32 avec l'air de combustion. Les fumées issues de cette combustion apportent les calories nécessaires au traitement thermique du mélange.

Les cendres 35 issues du traitement thermique sont extraites au moyen d'un convoyeur à double enveloppe 33. Ce convoyeur permet un refroidissement indirect des cendres pendant leur transport. L'eau, utilisée comme fluide de refroidissement, circule en circuit fermé et est refroidie au moyen d'un groupe aéro-échangeur 34.

Les fumées issues du traitement thermique des charbons et des boues passent dans un cyclone 36, où sont séparées les fines, avant d'être envoyées dans une chaudière 37. Une post-combustion est réalisée dans l'antichambre de la chaudière 37 et les fumées sont ensuite neutralisées dans un réacteur 38 par pulvérisation de lait de chaux. En amont du réacteur, une injection de charbon actif 39 permet de capter les métaux lourds présents dans les fumées.

Le lait de chaux est pompé à partir d'une cuve tampon. La préparation du lait de chaux se fait dans une cuve d'extinction 40 où sont mélangées la chaux vive et l'eau. La chaux vive est stockée dans un silo et dosée avant d'être envoyée vers la cuve d'extinction. Après neutralisation dans le réacteur 38, les fumées passent par un filtre à manches 47 avant d'être rejetées à l'atmosphère via un ventilateur 46 dans une cheminée 41.

La reprise des poussières sous le cyclone 36, la chaudière 37 et le filtre à manches 47 se fait à l'aide d'un transporteur en masse avec isolation 42 et sont envoyées vers une installation de mise en "big-bag" 43.

La vapeur surchauffée produite au niveau de la chaudière passe dans une turbine 44. Celle-ci est couplée à un alternateur qui produit de l'électricité et les vapeurs condensées sont renvoyées vers la chaudière via le poste d'eau 45.

Le tableau 1 présente un exemple de composition des différents produits entrants dans le traitement thermique : charbon épuré, boues de station d'épuration et boues de dragage. Le tableau 2 présente un exemple de composition du gaz issu de la thermolyse.

Le charbon issu de la thermolyse ainsi que les boues ont été soumis à plusieurs essais de laboratoire afin de déterminer la température optimale du traitement conduisant à l'amélioration de la qualité des produits traités thermiquement. Le tableau 3 présente le résultat d'une série d'essais appliqués au charbon et aux boues de dragage correspondant à différentes températures de traitement. L'analyse a été effectuée par IPC optique après minéralisation de l'échantillon. Les essais de température à 850°C sur le charbon produit montrent que la concentration en métaux lourds augmente proportionnellement avec l'élimination du carbone et des matières volatiles.

Par contre, après traitement à 1100°C ou au-delà, on constate aussi bien pour les boues que pour le charbon, une diminution importante des teneurs en métaux lourds.

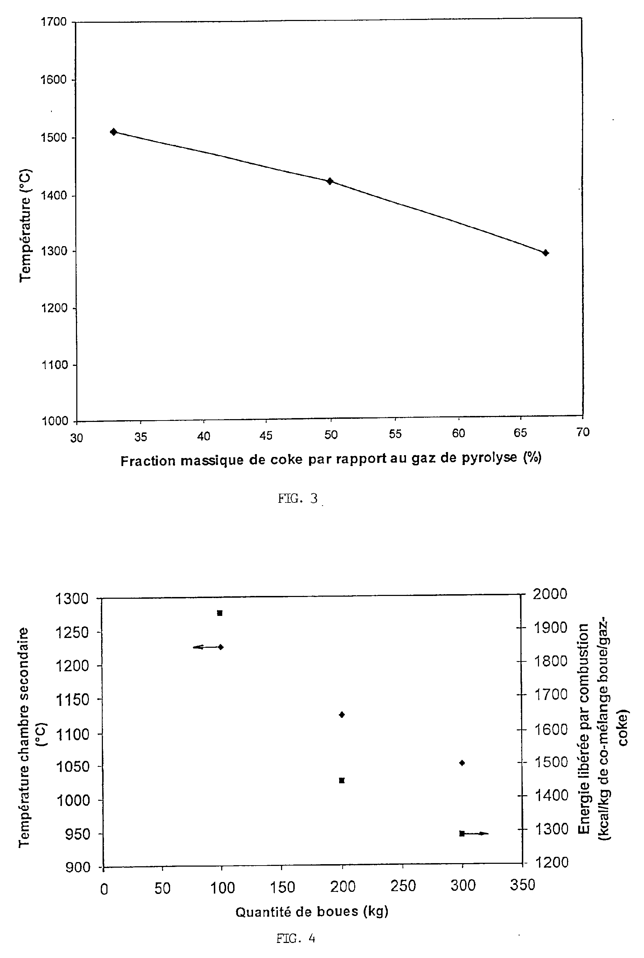

Des simulations théoriques ont permis d'évaluer la température atteinte lors de la co-combustion du charbon et des gaz issus de la thermolyse dans le rapport 1:1. La figure 3 montre la possibilité d'atteindre une température de co-combustion de l'ordre de 1400°C à ce rapport massique (sous 6% O₂ et avec 10% de pertes).

On s'est également intéressé au rapport massique boues/charbon épuré de manière à atteindre une température de traitement thermique de l'ordre de 1100°C. La figure 4 montre qu'une telle température est atteinte pour un rapport boues/charbon d'environ 5. La simulation théorique a été réalisée pour une co-combustion de 50 kg de gaz de pyrolyse et 50 kg de charbon et montre que 250 kg de boues peuvent être ainsi traitées pour atteindre une température voisine de 1100°C.

Le schéma de valorisation des RBL et des boues, donné à la figure 1, peut être complété par la spécification des quantités de boues pouvant être traitées simultanément avec le charbon produit par une thermolyse de RBL d'une capacité de 50 000 tonnes/an.

Le pourcentage de charbon produit par ce procédé est de 50% en masse et représente donc un débit de 25 000 tonnes/an. A l'issue du traitement mécanique destiné à récupérer les métaux non-ferreux incorporés dans le charbon, la quantité résiduelle obtenue de charbon traité, éventuellement par voie humide, peut ainsi aller jusqu'à 30 000 tonnes/an, en présence d'eau de lavage.

D'autre part, compte tenu d'un rapport boues/charbon égal à 5, la quantité de boues pouvant être traitées thermiquement à l'aide du procédé de l'invention atteint 150 000 tonnes/an. A titre d'exemple, comme la quantité de boues de station d'épuration disponible dans la zone du site de traitement, à savoir la région de Charleroi, est de l'ordre de 20 000 tonnes/an, le procédé peut donc accepter un débit de 130 000 tonnes/an de boues de dragage.

Le tableau 4 présente les résultats de composition chimique, à l'issue du traitement thermique d'un mélange de boues, dans la proportion de 18% de boues de station d'épuration et 82% de boues de dragage, à une température de 1100°C et sous atmosphère réductrice.

Le tableau 5 présente les résultats comparatifs de composition, à l'issue du traitement thermique d'un mélange de boues de station d'épuration et de boues de dragage (18 et 82% respectivement) et d'un mélange complet de boues et de charbon issu de la thermolyse. Sur base de ces résultats, il apparaît que les produits issus du traitement global des RBL et des boues, c'est à dire les cendres, répondent aux exigences de la réglementation régionale du 18.06.90, pour ce qui concerne la classification des terres décontaminées.

**Tableau 1**

| **Composition / Paramètres** | **Boues Station épuration** | **Boues Dragage** | **Coke de RBL** |
|---|---|---|---|
| Humidité sur brut (%) | 68,21 | 24,23 | 1 à 30,7 |
| ***Sur sec*** | | | |
| Cendres (%) | 55,1 | 76 | 78,9 |
| Mat. Organiques (%) | 45 | 24 | - |
| Mat. Volatiles (%) | - | - | 7,4 |
| C (%) | - | - | 21,94 |
| Cl (ppm) | - | - | 2 020 |
| S (ppm) | - | - | 7 648 |
| Pb (ppm) | 95 | 1 305 | 6 999 |
| Cu (ppm) | 107 | 84 | 8 182 |
| Zn (ppm) | 740 | 4 272 | 14 199 |
| Fe (%) | 5,06 | 4,05 | 17 |
| Si (%) | 15,0 | 19,8 | - |
| Al (%) | 4,0 | 5,2 | - |
| K₂O (%) | 0,13 | 1,74 | - |
| Na₂O (%) | - | 0,46 | - |
| Ca (%) | 11,77 | 3,7 | - |
| Mg (%) | 4,81 | 0,41 | - |
| PCI (kcal/kg) | 721 | 1 143 | 1 491 |

**Tableau 2**

| ***Composition*** | ***Unité*** | ***Valeur sur brut*** |
|---|---|---|
| H₂O | % | 24,54 |
| H₂ | % | 10,04 |
| CO₂ | % | 0,27 |
| CH₄ | % | 15,45 |
| C₂H₄ | % | 7,68 |
| C₂H₆ | % | 3,08 |
| C₃H₈ | % | 3,71 |
| C₂H₈ | % | 1,56 |
| N₂ | % | 29,2 |
| O₂ | % | 4,45 |
| PCI | kcal/kg | 6 825 |

**Tableau 3**

| ***Données de base*** | ***Unité*** | ***Pb*** | ***Zn*** | ***Cu*** | ***Fe*** |
|---|---|---|---|---|---|
| Coke brut | ppm | 6 999 | 14 199 | 8 182 | 17 |
| Coke 850°C | ppm | 12 680 | 20 660 | 7 330 | 20,6 |
| Boue | ppm | 1 305 | 4 272 | 84 | 4,05 |

| ***Influence de T*** | | | | | |
|---|---|---|---|---|---|
| Boue 1100°C | ppm | 306 | 128 | 85 | 7,05 |
| Boue 1250°C | ppm | 605 | 208 | 11 233 | 20,88 |
| Boue 1400°C | ppm | 616 | 280 | 166 | 5,71 |
| Coke 1100°C | ppm | 1 109 | 1 233 | 169 | 7,04 |
| Coke 1250°C | ppm | 1 164 | 644 | 204 | 6,29 |
| Coke 1400°C | ppm | 3 480 | 2 052 | 6 958 | 14,05 |

**Tableau 4**

| ***Composition*** | ***Mélange boues STEP - dragage (18:82 %*/*%)*** | ***Composition*** | ***Mélange boues STEP - dragage (18:82 %*/*%)*** |
|---|---|---|---|
| Fe | 60 | Sr | 0,2 |
| Si | 180 | Sn | 0,02 |
| Ca | 49 | Sb | - |
| Al | 23 | Zr | 0,02 |
| Ti | 4,2 | V | 0,19 |
| S | 6,4 | Co | 0,04 |
| Cu | 0,1 | Mo | 0,01 |
| Ba | 0,7 | W | 0,01 |
| Zn | 0,3 | V | 0,16 |
| Pb | 0,1 | As | - |
| Mg | 5,8 | Ag | 0,01 |
| P | 4,8 | Se | 0,01 |
| Mn | 1,0 | Be | 0,002 |
| Cr | 0,2 | Cd | - |
| Ni | 0,1 | Hg | - |

**Tableau 5**

| ***Composition*** | ***Mélange boues STEP - Dragage (18:82 %*/*%)*** | ***Mélange boues STEP + Dragage + Coke*** | ***Terres décontaminées Ar. 18.06.90*** |
|---|---|---|---|
| Pb (ppm) | 100 | 300 | 1 150 |
| Cu (ppm) | 100 | 113 | 210 |
| Zn (ppm) | 300 | 470 | 680 |
| Fe (%) | 6 | 7 | - |
| Si (%) | 18 | 15,27 | - |
| Al (%) | 2,3 | 3,56 | - |
| K₂O (%) | - | 0,72 | - |
| Na₂O (%) | - | 0,72 | - |
| Ca (%) | 4,9 | 4,42 | - |
| Mg (%) | 0,58 | 0,51 | - |

## Revendications

1. Procédé combiné de traitement et valorisation de résidus de broyage, au moins en partie métalliques, tels que de la ferraille broyée, contaminés par des substances organiques, avec des boues contenant des matières organiques, comprenant les étapes suivantes :
- lesdits résidus de broyage subissent une thermolyse, produisant des résidus solides riches en charbon épuré et des gaz de thermolyse riches en hydrocarbures ;
- lesdits résidus solides subissent un traitement mécanique, dont sont extraits des métaux et du charbon traité ;
- lesdites boues, mélangées avec le charbon traité, subissent un traitement thermique final utilisant également comme combustible lesdits gaz de thermolyse ;
- le traitement thermique final produit des cendres décontaminées et des fumées.

2. Procédé selon la revendication 1, **caractérisé en ce que** lesdits résidus de broyage comprennent la fraction grenue de résidus de broyage légers.

3. Procédé selon la revendication 2, **caractérisé en ce que** ladite fraction grenue comprend des particules de granulométrie supérieure à 13 mm.

4. Procédé selon la revendication 1, 2 ou 3, **caractérisé en ce que** lesdites boues sont des boues de station d'épuration ou des boues de dragage.

5. Procédé selon l'une quelconque des revendications précédentes, **caractérisé en ce que** la thermolyse est réalisée à une température telle que le charbon épuré et les gaz de thermolyse sont produits dans le rapport massique 1:1.

6. Procédé selon l'une quelconque des revendications précédentes, **caractérisé en ce que** le PCI desdits résidus de broyage est compris entre 3500 et 4500 kcal/kg.

7. Procédé selon l'une quelconque des revendications précédentes, **caractérisé en ce que** la thermolyse est réalisée de façon à obtenir des gaz de thermolyse dont le PCI est compris entre 6500 et 7500 kcal/kg.

8. Procédé selon l'une quelconque des revendications précédentes, **caractérisé en ce que** la thermolyse est réalisée de façon à obtenir du charbon épuré dont le PCI est compris entre 1000 et 2000 kcal/kg.

9. Procédé selon l'une quelconque des revendications précédentes, **caractérisé en ce que** le PCI des boues utilisées est compris entre 650 et 750 kcal/kg.

10. Procédé selon l'une quelconque des revendications précédentes, **caractérisé en ce que** le traitement thermique final comprend les étapes successives de passage dans au moins un cyclone, au moins une chambre de combustion, au moins une chaudière, au travers d'une injection de chaux, de charbon actif et dans au moins un filtre à manches.

11. Procédé selon l'une quelconque des revendications précédentes, **caractérisé en ce que** les fumées issues du traitement thermique final sont contrôlées par rapport à leur concentration en métaux lourds, en dioxines et en furanes.

12. Procédé selon l'une quelconque des revendications précédentes, **caractérisé en ce que** la co-combustion du charbon et du gaz de thermolyse à un rapport massique 1:1 est d'environ 1400°C.

13. Procédé selon l'une quelconque des revendications précédentes, **caractérisé en ce que** la température atteinte pendant le traitement thermique final dépend du rapport massique boues/charbon épuré.

14. Procédé selon la revendication 12 ou 13, **caractérisé en ce que** la température atteinte pendant le traitement thermique final est comprise entre 1050 et 1250°C.

15. Procédé selon l'une quelconque des revendications précédentes, **caractérisé en ce que** la température du traitement thermique final est d'environ 1100°C avec un rapport massique boues/charbon épuré d'environ 5.

16. Installation pour le traitement et la valorisation énergétique combinés de résidus de broyage légers, au moins en partie métalliques, tels que de la ferraille broyée, de granulométrie contrôlée et contaminés par des substances organiques, avec des boues contenant des matières organiques, **caractérisée en ce qu'**elle comprend :
- des moyens pour le chargement des résidus de broyage légers ;
- au moins une unité de thermolyse (13) desdits résidus de broyage légers dans laquelle sont produits, de préférence dans un rapport massique 1:1, des résidus solides riches en charbon épuré et des gaz de thermolyse riches en hydrocarbures ;
- des moyens mécaniques (16,17,18,19) pour la séparation d'une fraction importante des métaux présents dans lesdits résidus solides ;
- des moyens propres pour le chargement de boues (22,23,24,25,26,27,28), de préférence de station d'épuration et de dragage, suivis de moyens pour le mélange (20) desdites boues avec lesdits résidus solides traités mécaniquement ;
- des moyens pour l'amenée et l'injection (32) dudit mélange dans un four tournant (31), où ledit mélange subit un traitement thermique à haute température, et des moyens pour l'amenée et l'injection desdits gaz de thermolyse et d'air de combustion au niveau du brûleur dudit four tournant (31) ;
- un convoyeur à double enveloppe (33) pour l'extraction et le refroidissement indirect par eau des cendres décontaminées (35) produites dans ledit traitement thermique ;
- des moyens pour la décontamination des fumées (36,37,38,39,40,47) produites dans ledit traitement thermique, pour le rejet desdites fumées décontaminées dans l'atmosphère (46,41), pour la reprise des poussières (42,43) contenues dans lesdites fumées et pour la valorisation (44,45) de l'énergie calorifique contenues dans lesdites fumées.

17. Installation selon la revendication 16 **caractérisée en ce que** lesdits moyens mécaniques pour la séparation des métaux présents dans lesdits résidus solides comprennent un dispositif de criblage à 3 mm (16), suivi de deux broyeurs à cylindre installés en cascade, de préférence ouverts respectivement à 500 µm (17) et 250 µm (18), dans lesquels le passant est envoyé par gravité et lesquels sont suivis par un deuxième dispositif de criblage, de préférence à 500 µm (19).

18. Installation selon la revendication 16 ou 18, **caractérisée en ce que** les moyens pour le chargement desdites boues comprennent au moins une trémie tampon munies de vis sans âmes réparties parallèlement de manière régulière (22,23,26), une vis de reprise (24,27) et une vis inclinée (25,28).

19. Installation selon l'une quelconque des revendications 16 à 18, **caractérisée en ce que** les moyens de décontamination des fumées comprennent au moins un cyclone (36) suivi d'une chaudière (37) comprenant une antichambre pour la réalisation d'une post-combustion, ladite chaudière étant elle-même suivie d'un réacteur pour la neutralisation des fumées (38) et le captage des métaux lourds par injection de lait de chaux (40), et de préférence de charbon actif (39), ledit réacteur étant suivi d'un filtre à manches (47).

20. Installation selon l'une quelconque des revendications 16 à 19, **caractérisée en ce que** ladite chaudière (37) est un générateur de vapeur alimentant une turbine (44) couplée à un alternateur pour la production d'électricité.

21. Installation selon l'une quelconque des revendications 16 à 20, **caractérisée en ce que** les moyens de reprise des poussières comprennent un transporteur en masse avec isolation (42), disposé sous le cyclone (36), la chaudière (37) et le filtre à manches (47), ainsi qu'un dispositif de mise en "big-bag" (43).
